# FASCICULE DE BREVET EUROPEEN

(11) **EP 1 430 357 B1**
(45) Date de publication et mention de la délivrance du brevet: **31.07.2013**
(21) Numéro de dépôt: 02796319.8
(22) Date de dépôt: 28.08.2002
(51) Int. Cl.: G02F 1/139

(54) **DISPOSITIF D'AFFICHAGE BISTABLE A CRISTAL LIQUIDE NEMATIQUE A MASQUE OPTIQUE PERFECTIONNE**
BISTABILES NEMATISCHES FLÜSSIGKRISTALLANZEIGEBAUELEMENT MIT VERBESSERTER OPTISCHER MASKE
BISTABLE NEMATIC LIQUID CRYSTAL DISPLAY DEVICE WITH IMPROVED OPTICAL MASK

(30) Priorité: 29.08.2001 FR 0111227
(43) Date de publication de la demande: 23.06.2004
(73) Titulaire: France Brevets, 75009 Paris (FR)
(72) Inventeur: MARTINOT-LAGARDE, Philippe, F-91190 Gif sur Yvette (FR); BOISSIER, Alain, F-78160 Marly le Roi (FR); ANGELE, Jacques, F-92240 Malakoff (FR); PECOUT, Bertrand, F-78280 Guyancourt (FR); DOZOV, Ivan, F-91190 Gif sur Yvette (FR)
(74) Mandataire: Joubert, Cécile
(86) Numéro de dépôt international: PCT/FR2002/002949
(87) Numéro de publication internationale: WO 2003/019278

(56) Documents cités:
- GB-A- 2 350 692
- US-A- 4 239 345
- US-A- 5 132 816
- US-A- 5 488 499
- US-A- 5 764 325
- PATENT ABSTRACTS OF JAPAN vol. 1997, no. 04, 30 avril 1997 (1997-04-30) -& JP 08 327969 A (SHARP CORP), 13 décembre 1996 (1996-12-13)
- PATENT ABSTRACTS OF JAPAN vol. 017, no. 265 (P-1542), 24 mai 1993 (1993-05-24) -& JP 05 005886 A (MATSUSHITA ELECTRIC IND CO LTD), 14 janvier 1993 (1993-01-14)

## Description

La présente invention concerne le domaine des afficheurs à cristaux liquides.

Plus précisément la présente invention concerne les afficheurs bistables à cristaux liquides nématiques à cassure d'ancrage dont deux textures stables diffèrent par une torsion de 180°.

Les afficheurs à cristaux liquides sont couramment utilisés pour l'affichage de symboles, textes et images par les ordinateurs, les projecteurs vidéo, les téléviseurs, les montres et de nombreux autres systèmes de présentation de l'information. Leur surface est le plus souvent divisée en petites parties (pixels) formant des cellules dont les états sont indépendants.

Un critère de qualité très important d'un afficheur à cristal liquide est son contraste optique, généralement défini par une quantité appelée rapport de contraste ou contraste. Le contraste d'un afficheur à cristaux liquide est le quotient entre l'intensité de la lumière transmise ou réfléchie par une zone de l'écran placée dans l'état passant et l'intensité de la lumière transmise ou réfléchie par la même zone placée dans l'état non passant (on considère l'intensité de la lumière transmise ou réfléchie selon que l'afficheur est conçu pour un fonctionnement en transmission ou en réflexion). L'état passant de l'afficheur est idéalement caractérisé par un taux de transmission ou de réflexion aussi élevé que possible, tandis que l'état non passant présente idéalement un taux de transmission ou de réflexion aussi faible que possible. Un contraste élevé procure aux informations ou images affichées une plus grande lisibilité et une meilleure qualité. Par exemple, un rapport de contraste de moins de 10 correspond à une image terne ou délavée. La même image présentée avec un contraste de 20 apparaît beaucoup plus brillante et vive. La zone de l'afficheur prise en compte pour la mesure du contraste peut intégrer de nombreux pixels si la taille de ces derniers est inférieure à la limite de résolution de l'oeil dans les conditions normales d'observation de l'afficheur.

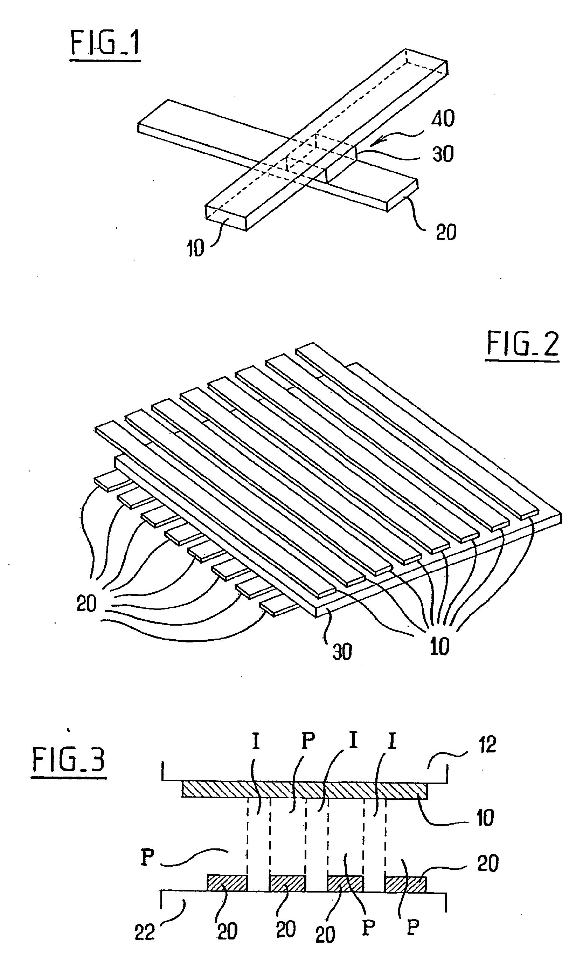

Un afficheur à cristaux liquides comprend généralement, comme on l'a illustré schématiquement sur les figures 1 à 3 annexées, deux plaques parallèles 12, 22 munies d'électrodes respectives 10, 20 sur leurs surfaces internes et contenant un matériau cristal liquide 30 entre les électrodes précitées. Les zones de recouvrement des électrodes opposées 10, 20 définissent les pixels 40. L'image affichée est constituée de la multitude de ces pixels placés dans les états optiques désirés. L'état optique de chaque pixel, c.-à-d. le fait qu'il apparaisse passant ou non passant, est déterminé par l'application de champs électriques convenables entre les électrodes 10, 20 qui définissent les pixels, et du schéma d'adressage utilisé.

La plupart des afficheurs à cristaux liquides sont monostables. Dans ceux-ci, une seule texture est réalisée sans champ. Sous champ, cette texture varie progressivement, donnant des états de plus en plus lumineux (ou de plus en plus non passants).

Les afficheurs bistables possèdent eux au moins deux états qui restent stables pendant un temps en théorie infini en l'absence de champ appliqué. L'un des états est l'état non passant, l'autre l'état passant. La stabilité des deux états découle de la quasi-égalité des énergies des deux textures et du fait qu'il existe une barrière de potentiel interdisant le passage spontané d'une texture à l'autre.

Les pixels voisins ne sont pas jointifs, mais séparés par une surface non-adressable appelée interpixel (voir figure 3). Sur la figure 3 on a schématisé un pixel sous la référence P, et un interpixel sous la référence I. Par exemple, lorsque l'afficheur est organisé sous la forme d'une matrice passive, les électrodes lignes 10 sont solidaires d'un substrat 12, les électrodes colonnes 20 d'un autre substrat 22, et les électrodes 10 et 20 se croisent à angle droit. Dans ce cas, les pixels P sont délimités par les surfaces de recouvrement des électrodes ligne 10 et colonne 20, et les interpixels I correspondent aux surfaces en regard avec un espace inter-électrode, qu'il soit situé sur le substrat ligne 12 ou colonne 22.

Cet espace inter-électrode permet d'isoler chaque électrode de ses voisines, et on ne peut le réduire en dessous d'une valeur critique qui dépend de la nature et de l'épaisseur du matériau utilisé pour constituer les électrodes, de la technologie de gravure employée, des champs électriques à appliquer et d'autres caractéristiques de l'afficheur.

En l'absence de couche d'occultation, l'état optique de l'interpixel est mal défini, et la transmission ou la réflexion de la lumière par ces zones est susceptible de dégrader de manière considérable le contraste d'un afficheur. Par exemple, un afficheur qui serait organisé en pixels carrés de pas égal à 0.25 mm et de coté égal à 0.23 mm présenterait un interpixel de 0.02 mm de large, correspondant à une surface totale non-active de l'ordre de 15 % de la surface utile totale de l'écran. Dans l'hypothèse défavorable d'un interpixel toujours passant, le contraste de l'afficheur mesuré dans une zone englobant plusieurs pixels pourrait chuter à une valeur inférieure à 7, même si le contraste microscopique mesuré à l'intérieur des pixels était arbitrairement élevé.

L'utilisation d'un mode d'affichage à contraste négatif (c. à d. ayant un état non passant lorsque le champ est nul, par exemple le mode TN en polariseurs parallèles) permet de limiter la perte de contraste par rapport à un afficheur à contraste positif. Néanmoins, cette solution n'est pas applicable aux afficheurs à forte résolution pour lesquels les champs latéraux créés lors de l'adressage des pixels distordent la texture du cristal liquide entre électrodes voisines et la rendent optiquement passante [1]. Le choix d'un contraste négatif peut également obliger à utiliser une configuration optique défavorable (l'état non passant du TN à contraste négatif, par exemple, est moins bon que celui du TN à contraste positif du fait de son chromatisme), ce qui limite le contraste de l'afficheur.

Toutes les autres solutions proposées pour pallier la perte de contraste due aux parties non-actives de l'écran sont basées sur l'adjonction entre les pixels ou dans l'espace inter-électrodes d'une couche opaque bloquant la lumière transmise ou réfléchie.

Le document [2] propose l'utilisation comme masque optique de couches d'aluminium ou de chrome. L'emploi de métaux comme masque optique nécessite une coûteuse opération de dépôt sous vide supplémentaire et des précautions d'isolement pour éviter l'apparition de court-circuits entre pixels. Ces couches présentent aussi un taux de réflexion irréductible de l'ordre de 1.5 % à 3%, ce qui limite le contraste en réflexion.

Le document [3] propose l'utilisation d'un polymère absorbant (coloré en noir) comme masque optique. Toutefois la densité optique assez faible des polymères colorés nécessite leur utilisation en couche relativement épaisse (> 0.5 µm) pour obtenir un taux de transmission suffisamment bas (< 1 %). La gravure de ces couches entraîne donc la création d'un relief interne abrupt à l'intérieur de l'afficheur, et l'apparition concomitante de champs électriques non uniformes, qui induisent des défauts d'orientation comme les zones à inversion de tilt ou de twist. Ces défauts peuvent-être réduits si l'on élargit le masque optique pour couvrir un peu les bords d'électrodes, au détriment du taux de transmission ou de réflexion de l'état passant. D'autre part, la précision de gravure de ces couches polymères assez épaisses est moindre, ce qui conduit à élargir le masque optique pour conserver des tolérances d'alignement suffisantes entre le masque optique et les électrodes. Cette méthode préserve donc le contraste, mais au détriment d'une autre caractéristique importante de l'afficheur qui est la brillance de l'état lumineux.

Une autre solution est d'utiliser une couche d'occultation faite d'un empilement d'un métal et d'une couche de polymère absorbante jouant le rôle d'antireflet et d'isolant [4] afin d'optimiser les propriétés optiques du masque optique en transmission et en réflexion sans trop l'épaissir, ou bien de faible appel à des structures encore plus compliquées à base de matériaux diélectriques contenant de très fines particules de métaux ou de semiconducteurs présentant des propriétés absorbantes [5].

Toutes ces méthodes se traduisent par des opérations de fabrication supplémentaires et l'utilisation de matériaux ou de procédés coûteux. Il faut en effet déposer le matériau opaque sur les électrodes et l'enlever des zones actives. Ces opérations doivent être précises car il faut créer des bandes opaques de 0.01 ou 0.02 mm de large sans empiéter sur les pixels ni laisser des zones non occultées. Le surcoût induit est particulièrement prohibitif pour les afficheurs matriciels passifs, dont le prix de référence est celui des afficheurs monochromes STN-LCD et dont le procédé de fabrication ne fait pas appel à des dépôts sous vide.

La présente invention permet de réaliser, dans le cas de cellules bistables à cristal liquide nématique, l'occultation des espaces interpixels, sans apport de matière en modifiant ou en adaptant les opérations de fabrication. Elle utilise les propriétés des afficheurs bistables qui seront rappelées brièvement.

Par exemple, le document [6] propose un afficheur bistable dont les états sont réalisés avec les mêmes positions à plat ou presque à plat des molécules sur les substrats (ancrages monostables). Ces états diffèrent par la texture du cristal liquide entre les deux surfaces des substrats. Pour l'un des états, les molécules sont pratiquement parallèles (la texture est uniforme ou légèrement tordue). Pour l'autre état, les molécules tournent à plat d'un demi-tour en allant d'un substrat à l'autre (la texture est tordue de 180° par rapport à la texture précédente). La commutation entre les deux textures est obtenue sous fort champ par la cassure de l'ancrage monostable sur au moins une des surfaces et l'utilisation d'un effet hydrodynamique.

Le document [7] décrit quant à lui une cellule à cristal liquide bistable et comprenant un cristal liquide, des surfaces frontières qui alignent le cristal liquide adjacent aux surfaces, et des moyens pour appliquer de l'énergie de commutation afin de commuter la cellule entre les états stables, l'épaisseur de la cellule et/ou les propriétés des surfaces frontières variant de place en place sur l'étendue de la cellule pour définir des régions actives et non actives, et pour produire ainsi un afficheur présentant un motif.

Enfin, le document [8] décrit un élément électro-optique à cristal liquide comprenant une paire de substrats, des électrodes, des couches d'alignement disposées sur les faces intérieures respectives opposées des substrats, et un cristal liquide nématique chiral pris en sandwich entre la paire de substrats, des pixels étant définis par les électrodes et des zones inter-pixels existant entre les pixels adjacents, dans lequel le rapport de l'épaisseur de la couche de cristal liquide au niveau des inter-pixels au pas hélicoïdal du cristal liquide est supérieur au rapport de l'épaisseur de la couche de cristal liquide au niveau des pixels au pas hélicoïdal, de sorte que le facteur de transmission de la lumière des zones inter-pixels est inférieur au facteur de transmission de la lumière des pixels.

Dans la présente invention, l'occultation des espaces interpixel est obtenue en réalisant des cellules bistables telles que le cristal liquide des espaces interpixel présente en permanence l'état non passant. Ceci est exécuté en fixant des conditions de torsion spontanée et d'ancrage spécifiques à la couche de cristal liquide recouvrant les espaces interpixels pour y favoriser la texture donnant l'état non passant, ces conditions réduisant son énergie par rapport à celle de la texture donnant l'état passant.

Pour cela, l'invention propose un procédé de fabrication d'un dispositif d'affichage bistable à cristal liquide nématique à masque optique à cristal liquide selon la revendication 1.

Dans ce qui suit, on suppose que la configuration de polarisation de la lumière pour l'observation de l'afficheur en transmission, en réflexion ou dans un mode mixte est optimisée à la conception pour donner le meilleur état non passant possible dans les pixels. L'état non passant peut correspondre soit à la texture tordue, soit à la texture uniforme. A titre d'exemple, l'optimisation de la configuration de polarisation dans le mode réflectif est de préférence conforme aux dispositions définies dans la demande de brevet déposée par la Demanderesse FR 2808891.

Un dispositif d'affichage bistable à cristal liquide nématique comprend, pour la formation d'un masque optique interpixels :
a) un matériau cristal liquide nématique contenu entre deux substrats parallèles, munis d'électrodes sur leurs surfaces intérieures en regard, pour permettre d'appliquer un champ électrique sur le dit cristal liquide, au moins le substrat frontal et l'électrode frontale étant optiquement transparents,
b) des couches ou des traitements d'alignement sur les électrodes, qui orientent le cristal liquide et permettent la réalisation alternative d'au moins deux textures distinctes stables ou métastables en absence de champ, où une des textures est soit non-tordue soit tordue à un angle total compris entre -90° et +90°, et l'autre texture présente une torsion supplémentaire d'un angle de l'ordre de 180°,
c) l'épaisseur d de la couche de cristal liquide recouvrant les électrodes étant choisie telle que le produit *d. Δn* est proche soit de *λ₀*/*4*, soit de *λ₀*/*2*, à un multiple entier de la longueur d'onde près, ou bien est compris entre ces deux valeurs (selon le mode de fonctionnement réflectif, transmissif ou transflectif de l'afficheur), *λ₀* étant la longueur d'onde médiane de la bande spectrale utile de l'afficheur et *Δn* la biréfringence du cristal liquide pour cette longueur d'onde,
d) des moyens conçus pour appliquer, sur le cristal liquide recouvrant les électrodes, des signaux électriques qui permettent de commuter par cassure de l'ancrage sur au moins un des deux substrats, entre les dites textures distinctes et de rester dans une d'entre-elles après enlèvement du champ, et
e) des moyens conçus pour favoriser, dans le cristal liquide recouvrant les espaces inter-électrodes, l'installation de celle des dites textures donnant l'état non passant.

Il s'entend que le nombre et la disposition des polariseurs est optimisé pour le mode de fonctionnement optique du dispositif d'affichage (transmissif, réflectif, translectif).

D'autres caractéristiques, buts et avantages de la présente invention apparaîtront à la lecture de la description détaillée qui va suivre et en regard des dessins annexés, donnés à titre d'exemples non limitatifs et sur lesquels :
- la figure 1 précédemment décrite, représente schématiquement un pixel classique obtenu à l'intersection de deux électrodes orthogonales entre elles,
- la figure 2 précédemment décrite, représente schématiquement une matrice multiplexée formée par un ensemble de deux réseaux d'électrodes croisées, situées de part et d'autre d'un matériau cristal liquide, définissant des pixels et des espaces interélectrodes,
- la figure 3 également précédemment décrite, représente schématiquement une vue en coupe d'une telle matrice multiplexée,
- la figure 4 illustre schématiquement la stabilité des textures en fonction de la torsion spontanée dans l'épaisseur du cristal liquide,
- la figure 5 représente schématiquement une induction de texture tordue dans un interpixel, conformément à la présente invention, par enlèvement de matière, conduisant dans les pixels à des textures parallèles (Pa) ou tordues (To) stables (donc à une instabilité) et dans l'interpixel à une texture tordue favorisée,
- la figure 6 représente schématiquement une induction de texture parallèle dans un interpixel par ajout de matière, conduisant dans les pixels à des textures parallèles (Pa) ou tordues (To) stables (donc à une instabilité) et dans l'interpixel à une texture parallèle favorisée.

Les afficheurs objets de la présente invention peuvent adresser deux textures stables sur la couche de cristal liquide recouvrant leurs pixels. La bistabilité est réalisée par adjonction d'un dopant chiral dans le cristal liquide.

Sans dopant chiral, un cristal liquide présente une orientation uniforme en l'absence de couple. Son pas libre est infini. En présence d'un dopant chiral, l'orientation du cristal liquide tourne le long d'une hélice lorsqu'il est traversé le long de son axe. Le cristal liquide présente alors un pas libre fini (la direction d'orientation tourne de 360° après un déplacement le long de l'axe d'une distance égale à un pas). Le pas libre diminue lorsque la concentration de dopant augmente. On définit là torsion libre q₀ du cristal liquide par l'expression 2π/p₀, où p₀ est le pas libre du cristal liquide, et la torsion spontanée après la traversée d'un échantillon du cristal liquide d'épaisseur d par d.q₀. La torsion spontanée est donc l'angle dont aurait tourné le directeur après la traversée de la couche de cristal liquide en l'absence de tout couple.

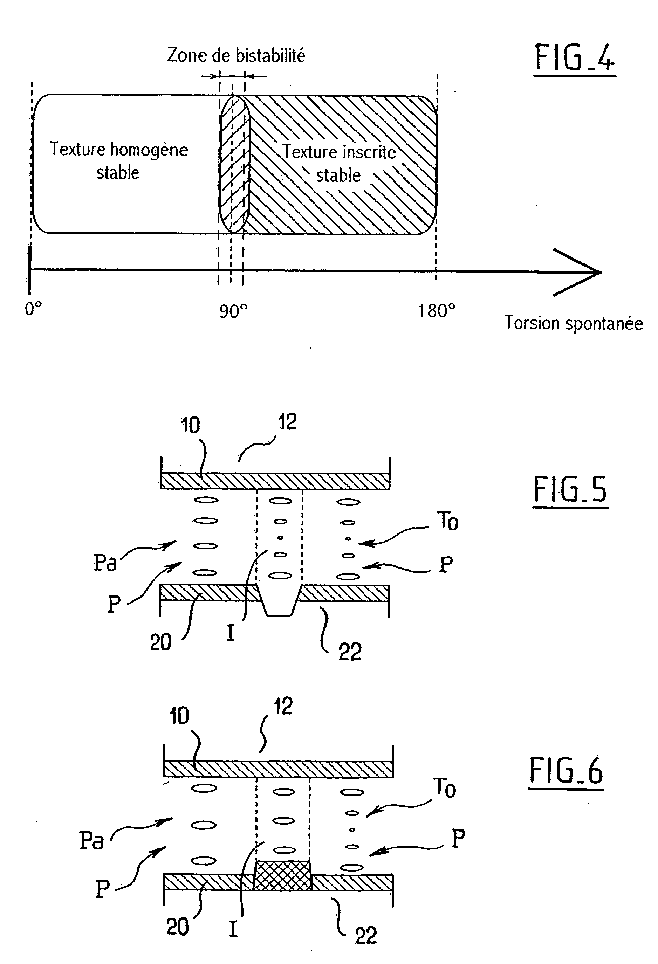

La bistabilité est obtenue en ajustant la torsion spontanée dans l'épaisseur du cristal liquide recouvrant les pixels à la valeur de 90°. Les conditions d'ancrage sur les surfaces imposent aux deux textures possibles, tordue et uniforme, que le cristal liquide soit déformé par une torsion de plus ou moins 90° par rapport à son état d'équilibre. Les énergies des deux états sont alors égales, et les deux textures deviennent bistables. Une torsion spontanée de moins de 90° favorise la texture uniforme, une torsion spontanée de plus de 90° favorise au contraire la texture tordue. Notons à ce stade que les caractéristiques fines de l'ancrage sur les surfaces contribuent aussi à l'énergie des textures. Par exemple, pour une même torsion spontanée du cristal liquide de 90° dans l'épaisseur de la cellule, une configuration d'ancrage avec un pré-tilt parallèle suffisamment élevé favorisera la texture tordue, tandis qu'une configuration avec le même pré-tilt anti-parallèle favorisera la texture uniforme. En pratique, l'équilibre rigoureux des énergies n'est pas indispensable pour assurer la bistabilité, du fait de l'existence d'une barrière de potentiel interdisant la transition spontanée d'une texture à l'autre. Par exemple, la torsion spontanée peut être ajustée sur une certaine plage centrée sur 90° sans perte de bistabilité (les textures tordue et uniforme restant toutes deux stables). Mais en dehors de cette plage, la texture d'énergie minimale est la seule stable (voir figure 4).

On va à présent exposer les moyens développés par la présente invention pour installer dans le cristal liquide recouvrant l'interpixel la texture donnant l'état non passant.

Le premier moyen est de rendre les épaisseurs du cristal liquide sur les parties actives (pixels) et non-actives (interpixels) différentes, cette différence d'épaisseur étant ajustée par enlèvement sélectif de matière. Comme la torsion spontanée sur les pixels doit être proche de 90° pour y rendre les textures tordues et uniformes d'égale énergie, l'enlèvement localisé de matière dans les espaces inter-électrode de chaque substrat accroît la torsion spontanée dans l'épaisseur du cristal liquide aux interpixels. La différence de torsion est proportionnelle à la différence des épaisseurs du cristal liquide recouvrant les pixels et les inter-pixels. Lorsque la torsion en un lieu differe significativement de la torsion d'équilibre idéale de 90°, la bistabilité est perdue et une des deux textures est favorisée (un écart de l'ordre de 5 à 10° suffit par exemple à favoriser une texture). Selon ce premier moyen, il suffit donc de fixer par fabrication la dite différence d'épaisseur à une valeur suffisante pour rendre instable la texture donnant l'état passant (cette texture pouvant être soit la texture uniforme, soit la texture tordue, selon la configuration de polarisation retenue).

Si c'est la texture tordue qui donne l'état non passant, un léger creusement de l'espace inter-électrode sur au moins un substrat la favorise et l'installe dans l'interpixel, formant ainsi un masque optique à cristal liquide. (voir figure 5).

Si c'est la texture uniforme qui donne l'état non passant, un dépôt localisé de matière dans l'espace inter-électrode, sur au moins un substrat, permet d'atteindre le même résultat. (voir figure 6).

Par exemple, prenons le cas d'un afficheur en réflexion muni d'un polariseur circulaire en face avant et d'un réflecteur en face arrière, rempli avec un cristal liquide de biréfringence *Δn≈ 0.13.* L'épaisseur *d* de cristal liquide recouvrant les pixels est choisie égale à 1.1 µm, proche de l'épaisseur optimum pour le cas réflectif donnée par la relation *d*.*Δn* = *λ₀*/*4*, où *λ₀* est la longueur d'onde médiane de la région spectrale de fonctionnement. La texture tordue donne alors l'état non passant. La torsion spontanée d'équilibre donnant la bistabilité sur les pixels est ajustée par fabrication à 90°. En creusant de 0.1 µm les espaces inter-électrode sur chaque substrat, la torsion spontanée devient d'environ 98° dans l'épaisseur du cristal liquide recouvrant les interpixels (égale à 1.2 µm, on néglige ici le cas des zones réduites où se croisent les espaces inter-électrodes des deux substrats) Cette torsion est suffisante pour favoriser l'installation de la texture tordue. Un masque optique non passant à faible taux de réflexion entourant les pixels est alors formé.

L'épaisseur du cristal liquide dans l'mterpixel doit cependant rester suffisamment proche de celle dans les pixels pour que l'état optique de l'interpixel reste non passant. Cette condition est satisfaite lorsque la différence d'épaisseur du cristal liquide recouvrant les pixels et les interpixels n'excède pas environ 15 % de l'épaisseur du cristal liquide recouvrant les pixels. Cette condition détermine l'amplitude maximale du relief interne de l'afficheur, plus précisément celui de la surface d'alignement déposée sur les électrodes ou espaces inter-électrode, ce relief pouvant être en creux. Le choix du matériau creusé dans l'espace inter-électrode et de la méthode de gravure ou de dépôt est guidé par des considérations de compatibilité avec le procédé de fabrication usuel des afficheurs. Par exemple, si un moyen de gravure par plasma est utilisé pour la fabrication des électrodes, le léger creusement de l'espace inter-électrode ne demande ni masque supplémentaire, ni opération nouvelle (une adaptation des paramètres de gravure peut toutefois s'avérer nécessaire).

Un autre moyen développé par la présente invention pour former le masque optique à cristal liquide s'applique au cas où l'état non passant est donné par la texture tordue. Ce moyen consiste à fabriquer des électrodes d'épaisseur adaptée à la création du relief permettant l'installation de la texture tordue dans l'interpixel. Cette méthode oblige cependant à fabriquer des électrodes relativement épaisses (par exemple de l'ordre de 40 nm ou plus), ce qui n'est parfois pas compatible avec lé respect des spécifications optiques ou électriques de l'afficheur, ou de certaines contraintes de fabrication.

Une autre méthode pour induire le masque optique à cristal liquide est d'ajuster le taux de dopant chiral du cristal liquide jusqu'à obtenir l'apparition de la texture désirée dans l'interpixel, l'afficheur étant conçu pour que l'épaisseur du cristal liquide recouvrant les pixels et les interpixels soit légèrement différente. La barrière de potentiel qui existe entre les textures tordue et uniforme donne en effet une certaine largeur à la plage de torsion spontanée compatible avec la bistabilité sur les pixels. Par exemple, on peut accroître le taux de dopant chiral jusqu'à atteindre la limite de bistabilité sur les pixels sans la dépasser. Tout relief en creux, même peu prononcé, de l'interpixel par rapport au pixel fait franchir à la torsion spontanée cette limite, ce qui suffit à y installer sélectivement la texture tordue. La même méthode s'applique pour installer la texture uniforme sur un interpixel présentant un relief en saillie, en réduisant le taux de dopant chiral jusqu'à la valeur limite.

Une autre méthode est de réaliser des conditions d'ancrage spécifiques à la couche de cristal liquide recouvrant les espaces interpixels qui favorisent la texture donnant l'état non passant. Par exemple, la couche d'alignement peut être déposée en phase liquide de telle manière qu'elle présente une surépaisseur dans les espaces en creux des inter-électrodes par rapport à son épaisseur sur la surface des électrodes, ce qui diminue son énergie d'ancrage azimutale. Cet effet, conjugué à l'abaissement local de la force de brossage appliquée dans ces surfaces en creux, favorise l'installation de la texture tordue par glissement de la direction d'orientation sous l'influence du couple azimutal exercé par la couche de cristal liquide. Ce résultat peut être accentué par un traitement thermique de l'afficheur. Il est également possible, par la réalisation d'un traitement d'orientation en deux fois, de modifier sélectivement la direction d'orientation dans l'espace inter-électrode afin que la torsion spontanée dans la couche de cristal liquide recouvrant ces espaces y défavorise la texture tordue ou uniforme. De la même manière, la modification sélective du pré-tilt peut permettre d'arriver au même résultat.

Enfin, l'utilisation d'un traitement temporaire peut permettre l'installation de la texture donnant l'état non passant dans l'interpixel, même lorsque le relief interne est réduit, en favorisant momentanément la texture désirée. Par exemple, si le remplissage de l'afficheur s'effectue avec une épaisseur provisoire de cristal liquide légèrement supérieure à l'épaisseur définitive, la torsion spontanée favorise temporairement l'installation de l'état tordu à la fois sur les pixels et les inter-pixels. Lorsque la couche de cristal liquide est réduite à son épaisseur nominale à la fin des opérations de fabrication, la bistabilité est obtenue sur les pixels. Si le relief en creux des interpixels est suffisant, on a vu que la texture uniforme est instable et la texture tordue est favorisée. Si le relief est trop réduit (par exemple, lorsqu'il est causé par la gravure d'électrodes épaisses de moins de 40 nm), les interpixels sont également bistables, et conservent l'état tordu initialisé par le traitement temporaire. Cet état n'est plus affecté par le fonctionnement ultérieur de l'afficheur et un masque optique définitif est obtenu.

Un autre moyen est d'effectuer un traitement thermique de l'afficheur après remplissage, permettant souvent d'obtenir le même résultat.

Lorsque l'une des méthodes exposées ci-dessus est employée, le cristal liquide occulte de lui-même les zones non adressables de l'afficheur, et forme un masque optique à cristal liquide permettant d'obtenir facilement un contraste supérieur à plusieurs dizaines.

Les propriétés favorables de ce masque optique à cristal liquide autoaligné sont indifféremment obtenues pour un fonctionnement transmissif, réflectif ou transflectif, et présentent de nombreux avantages par comparaison avec les autres techniques d'occultation par dépôt-et gravure de couches opaques déjà discutées :
- Faibles taux de transmission et de réflexion intrinsèques du masque optique à cristal liquide, adaptés à la réalisation d'afficheurs transmissifs, réflectifs ou transflectifs à fort contraste,
- Pas de dégradation de l'état passant par occultation partielle des pixels par un masque optique rajouté (taux d'ouverture maximal),
- Pas de dégradation de l'homogénéité du champ électrique à l'intérieur de l'afficheur,
- Pas de perturbation de l'alignement du cristal liquide en dehors des périodes de mises à jour de l'image, et donc pas de dégradation du contraste lorsque l'image mémorisée est observée,
- Aucune opération de dépôt ou d'alignement du masque optique à cristal liquide.

Bien que les méthodes qui précèdent ont été exposées en prenant l'exemple d'afficheurs se présentant sous la forme de matrices passives, elles sont applicables à toute disposition particulière d'électrodes sur les deux substrats aboutissant à la définition de zones adressables (pixels) ou non (interpixels).

### Bibliographie

[1] A. Lien, « Two dimensional Simulation of the Lateral Field Effect of a 90 degree TN-LCD cell", IDRC Eurodisplay'90 Digest
[2] Brevet européen EP0532311, publié le 17/03/1993 (Scheffer)
[3] Brevet américain US 5,307,189, publié le 26/04/1994 (Nishiki)
[4] Brevet américain US 5,666,177, publié le 09/09/1997 (Hsieh Ting-Chang)
[5] Brevet américain US 5,686,980, publié le 11/11/1997 (Kobayashi)
[6] Brevet français n° 2 740 894, (Durand)
[7] Brevet américain n° US 4,239,345, publié le 16 Décembre 1980 (Berreman)
[8] Brevet américain n° US 5,488,499, publié le 30 Janvier 1996 (Tanaka)

## Revendications

1. Procédé de fabrication d'un dispositif d'affichage bistable à cristal liquide nématique à masque optique à cristal liquide **caractérisé par le fait qu'**il comprend les étapes consistant à :
a) placer un matériau cristal liquide nématique entre deux substrats parallèles, munis d'électrodes (10,12) sur leurs surfaces intérieures en regard, pour permettre d'appliquer un champ électrique sur ledit cristal liquide, au moins le substrat frontal et l'électrode frontale étant optiquement transparents,
b) former des couches ou des traitements d'alignement sur les électrodes (10,12) qui orientent le cristal liquide et permettent la réalisation alternative d'au moins deux textures distinctes stables ou métastables en absence de champ, où une des textures est soit non-tordue soit tordue à un angle total compris entre -90° et +90°, et l'autre texture présente une torsion supplémentaire d'un angle de l'ordre de 180°,
c) contrôler l'épaisseur d de la couche de cristal liquide recouvrant les électrodes (10,12) telle que le produit *d.Δn* est proche soit de *λ₀*/*4*, soit de *λ₀*/*2*, ou bien est compris entre ces deux valeurs, *λ₀* étant la longueur d'onde médiane de la bande spectrale utile de l'afficheur et *Δn* la biréfringence du cristal liquide pour cette longueur d'onde,
d) fournir des moyens conçus pour appliquer, sur le cristal liquide recouvrant les électrodes, des signaux électriques qui permettent de commuter par cassure de l'ancrage sur au moins un des deux substrats, entre lesdites textures distinctes et de rester dans une d'entre-elles après enlèvement du champ, et
e) fournir des moyens conçus pour favoriser, dans le cristal liquide recouvrant les espaces interélectrodes (I), l'installation de celle desdites textures donnant l'état non passant, **caractérisé en ce que** le procédé comprend en outre les étapes consistant à
e1) réaliser une épaisseur de cristal liquide différente entre les parties actives correspondant aux pixels (P) et les parties non actives interpixels (I) par l'enlèvement localisé de matière dans les espaces interélectrodes de chaque substrat réalisé au cours de la même opération que la gravure des électrodes (10,12) par un procédé de gravure humide ou assisté par plasma, et
e2) ajuster un taux de dopant chiral du cristal liquide de telle sorte que la torsion spontanée dans l'épaisseur du cristal liquide recouvrant les espaces interélectrodes défavorise la texture donnant l'état passant et que la torsion spontanée dans l'épaisseur du cristal liquide recouvrant les pixels (P) est comprise dans la plage permettant la bistabilité des textures tordue et uniforme.

2. Procédé selon la revendication 1, **caractérisé par le fait que** la différence d'épaisseur entre les parties actives (P) et non actives (I) est inférieure à 15% de l'épaisseur du cristal liquide recouvrant les parties actives.

3. Procédé selon l'une des revendications 1 ou 2, **caractérisé par le fait que** la différence d'épaisseur du cristal liquide est comprise entre 5 et 10% de l'épaisseur du cristal liquide recouvrant les parties actives (P).

4. Procédé selon l'une des revendications précédentes, **caractérisé par le fait que** l'enlèvement de matière est contrôlé pour définir une texture tordue correspondant à l'état non passant.

5. Procédé selon l'une des revendications précédentes, **caractérisé par le fait que** la différence d'épaisseur de cristal liquide est obtenue par contrôle de l'épaisseur des électrodes (10,12) de telle sorte que la torsion spontanée dans l'épaisseur du cristal liquide recouvrant les espaces interélectrodes (I) défavorise la texture donnant l'état passant.

6. Procédé selon l'une des revendications précédentes, **caractérisé par le fait que** le dispositif présente un relief en creux interpixels (I) et que l'étape d'ajustement du taux de dopant chiral consiste à augmenter ce taux jusqu'à l'obtention d'une limite de bistabilité.

7. Procédé selon l'une des revendications 1 à 5, **caractérisé par le fait que** le dispositif comprend des reliefs en saillie interpixels (I) et que l'étape d'ajustement du taux de dopant chiral consiste à réduire ce taux jusqu'à l'obtention d'une limite de bistabilité.

8. Procédé selon l'une des revendications précédentes, **caractérisé par le fait qu'**il comprend l'étape consistant à contrôler les caractéristiques d'ancrage ou d'alignement dans les espaces interélectrodes (I) afin d'y favoriser les textures donnant l'étape non passant.

9. Procédé selon la revendication 7, **caractérisé par le fait qu'**il comprend l'étape consistant à déposer une couche d'alignement en phase liquide de telle manière qu'elle présente une surépaisseur dans les espaces en creux des interélectrodes (I) par rapport à son épaisseur sur la surface des électrodes (10,12) afin de diminuer son énergie d'ancrage azimutal.

10. Procédé selon l'une des revendications 8 ou 9, **caractérisé par le fait qu'**il comprend un traitement d'orientation réalisé en deux fois afin de modifier sélectivement la direction d'orientation dans l'espace interélectrode (I) afin que la torsion spontanée dans la couche de cristal liquide recouvrant ces espaces y défavorise la structure passante.

11. Procédé selon l'une des revendications précédentes, **caractérisé par le fait qu'**il comprend un traitement thermique, électrique ou mécanique, du dispositif afin de provoquer une modification temporaire de la torsion spontanée, et un contrôle des caractéristiques d'ancrage dans le cristal liquide recouvrant les espaces interélectrodes (I) tel que ce traitement temporaire y défavorise la texture donnant l'état passant.

12. Procédé selon l'une des revendications précédentes, **caractérisé par le fait que** l'opération de remplissage est effectuée avec une épaisseur de cristal liquide défavorisant la texture donnant l'état passant, les opérations de fin de fabrication confèrant ensuite à la couche de cristal liquide remplissant le dispositif son épaisseur nominale.

13. Procédé selon la revendication 12, **caractérisé par le fait que** l'opération de remplissage du dispositif est effectuée avec une épaisseur de cristal liquide supérieure à l'épaisseur nominale définitive, la couche de cristal liquide étant ensuite réduite à son épaisseur nominale, à la fin des opérations de fabrication, pour obtenir la bistabilité sur les pixels (P) tout en maintenant la texture défavorisant l'état passant entre les pixels (P).

14. Procédé selon l'une des revendications précédentes, **caractérisé par le fait qu'**au moins une des électrodes (10,12) contient plusieurs segments différents pour permettre de réaliser plusieurs éléments d'image (pixels) indépendants sur les mêmes substrats et dans le même dispositif.

15. Procédé selon l'une des revendications précédentes, **caractérisé par le fait que** les éléments d'image (pixels) indépendants sont munis de moyens indépendants pour appliquer le champ.

16. Procédé selon l'une des revendications précédentes, **caractérisé par le fait que** les éléments d'image (pixels) indépendants sont organisés dans une matrice passive multiplexée.

17. Procédé selon l'une des revendications 1 à 15, **caractérisé par le fait que** les éléments d'image (pixels) indépendants sont organisés dans une matrice active multiplexée.

## Patentansprüche

1. Verfahren zur Herstellung einer bistabilen Anzeigevorrichtung mit nematischem Flüssigkristall und optischer Flüssigkristallmaske, **dadurch gekennzeichnet, dass** es folgende Schritte umfasst:
a) Setzen eines nematischen Flüssigkristallmaterials zwischen zwei parallele Substrate, die auf ihren gegenüberliegenden Innenseiten mit Elektroden (10, 12) versehen sind, um ein elektrisches Feld an den Flüssigkristall anlegen zu können, wobei mindestens das vordere Substrat und die vordere Elektrode optisch transparent sind,
b) Bilden von Ausrichtungsschichten oder - behandlungen auf den Elektroden (10, 12), die den Flüssigkristall orientieren und die abwechselnde Ausbildung von mindestens zwei unterschiedlichen stabilen oder metastabilen Texturen ermöglichen, wenn kein Feld vorliegt, wobei eine der Texturen in einem Gesamtwinkel zwischen -90° und +90° entweder verdrillt oder nicht verdrillt ist und die andere Textur eine zusätzliche Verdrillung um einen Winkel von ungefähr 180° aufweist,
c) Regeln der Dicke d der Flüssigkristallschicht, welche die Elektroden (10, 12) bedeckt, so dass das Produkt d.Δn entweder bei λ₀/4 oder bei λ₀/2 oder zwischen diesen beiden Werten liegt, wobei λ₀ die mittlere Wellenlänge des Nutzspektralbandes der Anzeigeeinrichtung ist und Δn die Doppelbrechung des Flüssigkristalls für diese Wellenlänge ist,
d) Bereitstellen von Mitteln, die dazu ausgelegt sind, um an dem Flüssigkristall, der die Elektroden bedeckt, elektrische Signale anzulegen, die es ermöglichen, durch Abbrechen der Verankerung auf mindestens einem der beiden Substrate zwischen den unterschiedlichen Texturen umzuschalten und auf einer davon zu bleiben, nachdem das Feld entfernt wurde, und
e) Bereitstellen von Mitteln, die ausgelegt sind, um in dem Flüssigkristall, der die Elektrodenzwischenräume (I) bedeckt, die Installation derjenigen der Texturen zu fördern, die den nicht durchlässigen Zustand ergibt,
**dadurch gekennzeichnet, dass** das Verfahren ferner folgende Schritte umfasst:
e1) Ausbilden einer anderen Flüssigkristalldicke zwischen den aktiven Teilen, die den Pixeln (P) entsprechen, und den nicht aktiven Pixelzwischenräumen (I) durch örtliche Materialabtragung in den Elektrodenzwischenräumen jedes Substrats während des gleichen Vorgangs wie das Ätzen der Elektroden (10, 12) durch ein Nassätzverfahren oder ein Plasmaätzverfahren, und
e2) Anpassen eines chiralen Dotierstoffanteils des Flüssigkristalls, so dass die spontane Verdrillung in der Dicke des Flüssigkristalls, der die Elektrodenzwischenräume bedeckt, die Textur beeinträchtigt, die den durchlässigen Zustand ergibt, und dass die spontane Verdrillung in der Dicke des Flüssigkristalls, der die Pixel (P) bedeckt, in dem Bereich liegt, der die Bistabilität der verdrillten und einheitlichen Texturen ermöglicht.

2. Verfahren nach Anspruch 1, **dadurch gekennzeichnet, dass** der Dickenunterschied zwischen den aktiven Teilen (P) und den nicht aktiven Teilen (I) kleiner als 15 % der Dicke des Flüssigkristalls ist, der die aktiven Teile bedeckt.

3. Verfahren nach einem der Ansprüche 1 oder 2, **dadurch gekennzeichnet, dass** der Dickenunterschied des Flüssigkristalls zwischen 5 und 10 % der Dicke des Flüssigkristalls liegt, der die aktiven Teile (P) bedeckt.

4. Verfahren nach einem der vorhergehenden Ansprüche, **dadurch gekennzeichnet, dass** die Materialabtragung geregelt ist, um eine verdrillte Textur zu definieren, die dem nicht durchlässigen Zustand entspricht.

5. Verfahren nach einem der vorhergehenden Ansprüche, **dadurch gekennzeichnet, dass** der Unterschied der Flüssigkristalldicke durch eine Regelung der Dicke der Elektroden (10, 12) erzielt wird, so dass die spontane Verdrillung in der Dicke des Flüssigkristalls, der die Elektrodenzwischenräume (I) bedeckt, die Textur beeinträchtigt, die den durchlässigen Zustand ergibt.

6. Verfahren nach einem der vorhergehenden Ansprüche, **dadurch gekennzeichnet, dass** die Vorrichtung ein vertieftes Relief im Zwischenpixelbereich (I) aufweist, und dass der Schritt des Anpassens des chiralen Dotierstoffanteils darin besteht, diesen Anteil bis zur Erzielung einer Bistabilitätsgrenze zu erhöhen.

7. Verfahren nach einem der Ansprüche 1 bis 5, **dadurch gekennzeichnet, dass** die Vorrichtung vorstehende Reliefs zwischen im Zwischenpixelbereich (I) umfasst, und dass der Schritt des Anpassens des chiralen Dotierstoffanteils darin besteht, diesen Anteil bis zur Erzielung einer Bistabilitätsgrenze zu reduzieren.

8. Verfahren nach einem der vorhergehenden Ansprüche, **dadurch gekennzeichnet, dass** es den Schritt umfasst, der darin besteht, die Verankerungs- oder Ausrichtungskennzeichen in den Elektrodenzwischenräumen (I) zu regeln, um darin die Texturen zu fördern, die den nicht durchlässigen Zustand ergeben.

9. Verfahren nach Anspruch 7, **dadurch gekennzeichnet, dass** es den Schritt umfasst, der darin besteht, eine Ausrichtungsschicht in flüssiger Phase abzuscheiden, so dass sie in den vertieften Elektrodenzwischenräumen (I) im Verhältnis zu ihrer Dicke auf der Oberfläche der Elektroden (10, 12) eine Überdicke aufweist, um ihre azimutale Verankerungsenergie zu verringern.

10. Verfahren nach einem der Ansprüche 8 oder 9, **dadurch gekennzeichnet, dass** es eine Orientierungsbehandlung umfasst, die in zwei Schritten ausgeführt wird, um selektiv die Orientierungsrichtung in dem Elektrodenzwischenraum (I) zu ändern, damit die spontane Verdrillung in der Flüssigkristallschicht, die diese Räume bedeckt, darin die durchlässige Struktur beeinträchtigt.

11. Verfahren nach einem der vorhergehenden Ansprüche, **dadurch gekennzeichnet, dass** es eine thermische, elektrische oder mechanische Behandlung der Vorrichtung umfasst, um eine vorübergehende Änderung der spontanen Verdrillung hervorzurufen, und eine Regelung der Verankerungskennzeichen in dem Flüssigkristall, der die Elektrodenzwischenräume (I) bedeckt, so dass diese vorübergehende Behandlung darin die Textur beeinträchtigt, die den durchlässigen Zustand ergibt.

12. Verfahren nach einem der vorhergehenden Ansprüche, **dadurch gekennzeichnet, dass** der Füllvorgang mit einer Flüssigkristalldicke ausgeführt wird, welche die Textur beeinträchtigt, die den durchlässigen Zustand ergibt, wobei die Vorgänge am Ende der Herstellung dann der Flüssigkristallschicht, welche die Vorrichtung füllt, ihre Nenndicke verleihen.

13. Verfahren nach Anspruch 12, **dadurch gekennzeichnet, dass** der Füllvorgang der Vorrichtung mit einer Flüssigkristalldicke ausgeführt wird, die größer als ihre endgültige Nenndicke ist, wobei die Flüssigkristallschicht dann am Ende der Herstellungsvorgänge auf ihre endgültige Nenndicke reduziert wird, um die Bistabilität auf den Pixeln (P) zu erzielen und dabei die Textur beizubehalten, die den durchlässigen Zustand zwischen den Pixeln (P) beeinträchtigt.

14. Verfahren nach einem der vorhergehenden Ansprüche, **dadurch gekennzeichnet, dass** mindestens eine der Elektroden (10, 12) mehrere verschiedene Segmente enthält, um es zu ermöglichen, mehrere unabhängige Bildelemente (Pixel) auf den gleichen Substraten und in der gleichen Vorrichtung auszubilden.

15. Verfahren nach einem der vorhergehenden Ansprüche, **dadurch gekennzeichnet, dass** die unabhängigen Bildelemente (Pixel) mit unabhängigen Mitteln ausgestattet sind, um das Feld anzulegen.

16. Verfahren nach einem der vorhergehenden Ansprüche, **dadurch gekennzeichnet, dass** die unabhängigen Bildelemente (Pixel) in einer gemultiplexten passiven Matrix organisiert sind.

17. Verfahren nach einem der Ansprüche 1 bis 15, **dadurch gekennzeichnet, dass** die unabhängigen Bildelemente (Pixel) in einer gemultiplexten aktiven Matrix organisiert sind.

## Claims

1. Process for manufacturing a bistable nematic liquid-crystal display device with a liquid-crystal optical mask, **characterized in that** it comprises the steps consisting in:
a) placing a nematic liquid-crystal material between two parallel substrates, which are provided with electrodes (10, 12) on their facing inner surfaces in order to allow an electric field to be applied to the said liquid crystal, at least the front substrate and the front electrode being optically transparent;
b) forming alignment layers or treatments on the electrodes (10, 12) which orient the liquid crystal and produce an alternation of at least two distinct textures that are stable or metastable in the absence of a field, where one of the textures is either not twisted or twisted through a total angle of between -90° and +90° and the other texture has an additional twist through an angle of about 180°;
c) controlling the thickness d of the liquid-crystal layer covering the electrodes (10, 12) so that the product *d.Δn* is close either to *λ*_{*0*/4} or *λ*_{*0*/*2*}, or else is between these two values, *λ₀* being the median wavelength of the useful spectral band of the display and *Δₙ* the birefringence of the liquid crystal for this wavelength;
d) providing means designed to apply, to the liquid crystal covering the electrodes, electrical signals which allow it to switch, by breaking the anchoring on at least one of the two substrates, between the said distinct textures and allow it to remain in one of them after the field has been removed; and
e) providing means designed to promote the establishment of that one of the said textures giving the off-state in the liquid crystal covering the inter-electrode spaces (I), **characterized in that** the process also comprises the steps consisting in
e1) producing a different thickness of liquid crystal between the active portions corresponding to the pixels (P) and the inter-pixel non-active portions (I) by localized removal of material in the inter-electrode spaces of each substrate carried out during the same operation as the etching of the electrodes (10, 12), by a wet etching or plasma-enhanced etching process, and
e2) adjusting the chiral dopant content of the liquid crystal in such a way that the spontaneous twist in the thickness of the liquid crystal covering the inter-electrode spaces is unfavourable to the texture giving the on-state and **in that** the spontaneous twist in the thickness of the liquid crystal covering the pixels (P) lies within the range allowing the twisted and uniform textures to be bistable.

2. Process according to Claim 1, **characterized in that** the difference in thickness between the active (P) and non-active (I) portions is less than 15% of the thickness of the liquid crystal covering the active portions.

3. Process according to either of Claims 1 and 2, **characterized in that** the difference in thickness of the liquid crystal is between 5 and 10% of the thickness of the liquid crystal covering the active portions (P).

4. Process according to one of the preceding claims, **characterized in that** the removal of material is controlled in order to define a twisted texture corresponding to the off-state.

5. Process according to one of the preceding claims, **characterized in that** the difference in thickness of liquid crystal is obtained by controlling the thickness of the electrodes (10, 12) in such a way that the spontaneous twist in the thickness of the liquid crystal covering the inter-electrode spaces (I) is unfavourable to the texture giving the on-state.

6. Process according to one of the preceding claims, **characterized in that** the device has a recessed inter-pixel relief (I) and **in that** the step of adjusting the chiral dopant content consists in increasing this content until a bistability limit is obtained.

7. Process according to one of Claims 1 to 5, **characterized in that** the device includes projecting inter-pixel reliefs (I) and **in that** the step of adjusting the chiral dopant content consists in reducing this content until a bistability limit is obtained.

8. Process according to one of the preceding claims, **characterized in that** it includes the step consisting in controlling the anchoring or alignment characteristics in the inter-electrode spaces (I) so as to favour the textures giving the off-state therein.

9. Process according to Claim 7, **characterized in that** it includes a step consisting in depositing an alignment layer in the liquid phase in such a way that it has an additional thickness in the recessed inter-electrode spaces (I) compared with its thickness on the surface of the electrodes (10, 12), so as to reduce its azimuthal anchoring energy.

10. Process according to either of Claims 8 and 9, **characterized in that** it includes an orientation treatment carried out in two goes so as to selectively modify the orientation direction in the inter-electrode space (I) so that the spontaneous twist in the liquid crystal layer covering these spaces is unfavourable to the on-state texture therein.

11. Process according to one of the preceding claims, **characterized in that** it includes an electrical, mechanical or heat treatment of the device so as to induce a temporary modification of the spontaneous twist and to control the anchoring characteristics in the liquid crystal covering the inter-electrode spaces (I), such that this temporary treatment is unfavourable to the texture giving the on-state therein.

12. Process according to one of the preceding claims, **characterized in that** the filling operation is carried out with a thickness of liquid crystal unfavourable to the texture giving the on-state, the end-of-manufacturing operations then giving the layer of liquid crystal filling the device its nominal thickness.

13. Process according to Claim 12, **characterized in that** the operation of filling the device is carried out with a thickness of liquid crystal greater than the final nominal thickness, the layer of liquid crystal then being reduced to its nominal thickness, at the end of the manufacturing operations, in order to obtain bistability in the pixels (P) while maintaining the texture unfavourable to the on-state between the pixels (P).

14. Process according to one of the preceding claims, **characterized in that** at least one of the electrodes (10, 12) contains several different segments in order to make it possible to produce several independent picture elements (pixels) on the same substrates and in the same device.

15. Process according to one of the preceding claims, **characterized in that** the independent picture elements (pixels) are provided with independent means for applying the field.

16. Process according to one of the preceding claims, **characterized in that** the independent picture elements (pixels) are organized in a multiplexed passive matrix.

17. Process according to one of Claims 1 to 15, **characterized in that** the independent picture elements (pixels) are organized in a multiplexed active matrix.
